# EUROPÄISCHE PATENTSCHRIFT

(11) **EP 2 032 951 B1**
(45) Veröffentlichungstag und Bekanntmachung des Hinweises auf die Patenterteilung: **23.05.2018**
(21) Anmeldenummer: 07764653.7
(22) Anmeldetag: 14.06.2007
(51) Int. Cl.: G01F 23/26

(54) **KAPAZITIVE FÜLLSTANDSMESSVORRICHTUNG FÜR SCHÜTTGÜTER**
CAPACITIVE LEVEL MEASURING APPARATUS FOR BULK MATERIALS
DISPOSITIF DE MESURE DE NIVEAU CAPACITIF POUR PRODUITS EN VRAC

(30) Priorität: 14.06.2006 DE 202006009381 U
(43) Veröffentlichungstag der Anmeldung: 11.03.2009
(73) Patentinhaber: Mesima Messtechnik Andreas Pfister, 71332 Waiblingen (DE)
(72) Erfinder: Pfister, Andreas, 71364 Winnenden (DE)
(74) Vertreter: Raible Deissler Lehmann Patentanwälte PartG mbB
(86) Internationale Anmeldenummer: PCT/EP2007/005267
(87) Internationale Veröffentlichungsnummer: WO 2007/144180

(56) Entgegenhaltungen:
- EP-A- 0 310 761
- DE-A1- 3 006 425
- FR-A- 1 276 076
- GB-A- 1 503 317
- US-A- 4 987 776

## Beschreibung

Die Erfindung betrifft ein Silo mit einem kapazitiven Füllstandsensor zur Bestimmung eines Füllstandes von trockenen Schüttgütern.

Kapazitive Füllstandsensoren für Flüssigkeiten und feine, das heißt feinkörnige Feststoffe, sind zum Beispiel aus der europäischen Patentanmeldung EP 0338400 oder der europäischen Patentanmeldung EP 0470483 bekannt. Die Druckschrift EP 0470483 beschreibt zum Beispiel ein Verfahren für die DKkompensierte kapazitive Füllstandmessung mit einer Sondenanordnung, die einen Kondensator zur Füllstandmessung und einen Kondensator zur DK-Kompensation aufweist, die unterschiedliche kapazitive Steilheiten besitzen und sich gemeinsam über einen gleichen Füllstandhöhenmessbereich erstrecken. Druckschrift EP 0470483 beschreibt, dass aus dem Messwert der Füllstandmesssonde und dem Messwert der Kompensationssonde ein Verhältniswert Q gebildet wird, der allein von der Dielektrizitätskonstante ∈ᵣ des die Mess- und Kompensationssonde benetzenden Füllguts abhängt, und dass die Füllstandhöhe H des Füllguts aus dem Messwert der Füllstandmesssonde gebildet wird, wobei der Messwert mit einem Korrekturwert K elektronisch korrigiert wird, der von der Geometrie und dem Dielektrikum der Füllstandmesssonde und dem Verhältniswert Q abhängt.

Die bekannten Anwendungen und Vorrichtungen sind technisch aufwendig. Darüber hinaus ermöglichen die Anwendungen und Vorrichtungen nicht die kapazitive Füllstandmessung von grobkörnigem Schüttgut wie zum Beispiel Holzpeletts oder anderen trockenen Feststoffen. Darüber hinaus ergeben sich bei der Messung von Brennstoffen Schwierigkeiten im Bezug auf eine elektrische Messung in explosionsgefährdeten Umgebungen.

Die Druckschrift FR 1 276 076 beschreibt einen kapazitiven Füllstandsensor zur Bestimmung eines Füllstandes von trockenen Schüttgütern in einem Silo mit einem ersten Stab, der eine erste Kondensatorelektrode bildet und in dem Silo fest angebracht ist, einem zweiten Stab, der eine zweite Kondensatorelektrode bildet und in einem vorbestimmten Abstand vom ersten Stab und außerhalb des ersten Stabes im Wesentlichen parallel zu dem ersten Stab fest angebracht ist und mit einer einen Schwingkreis beinhaltenden Sensorelektronik.

Die Druckschrift DE 30 06 425 A1 beschreibt einen Füllstandmesser für schüttfähige Güter in einem Behälter mit wenigstens drei Paar Elektroden, von denen ein Paar als Referenzelektrodenpaar vollständig im schüttfähigen Gut getaucht wird.

Die Druckschrift EP 0 310 761 A1 beschreibt einen Füllstandmesser, bei dem eine Kapazität zur Bestimmung des Füllstands herangezogen wird und der einen Resonanzkreis umfasst.

Die Druckschrift US 1,503,317 beschreibt ein Verfahren zum Messen des Inhalts eines Containers.

Die Druckschrift US 4,987,776 beschreibt eine Messeinrichtung, die mit einem Oszillator zusammenwirkt.

Der vorliegenden Erfindung liegt die Aufgabe zu Grunde, ein Silo mit einem kapazitiven Füllstandsensor zur kapazitiven Füllstandmessung zur Verfügung zu stellen, welcher die vorgenannten Nachteile nicht aufweist oder zumindest verringert und kostengünstig und einfach zur Verfügung gestellt werden kann.

Diese Aufgabe wird durch ein Silo gemäß Anspruch 1 gelöst.

Vorteilhafte Ausführungsformen ergeben sich aus den Unteransprüchen, den beigefügten Zeichnungen sowie deren Beschreibung.

Es wird ein kapazitiver Füllstandsensor zur Bestimmung eines Füllstandes von trockenen Schüttgütern in einem Silo zur Verfügung gestellt. Der Füllstandsensor beinhaltet zwei Stäbe, die in einem Abstand zueinander angebracht sind, eine explosionsgeschützte Sensorelektronik, die mit einem ersten der beiden Stäbe und einem zweiten der beiden Stäbe elektrischen verbunden ist. Die Sensorelektronik ist innerhalb des Silos in der Nähe der beiden Stäbe der Verfügung gestellt. Ferner beinhaltet der Füllstandsensor eine außerhalb des Silos zur Verfügung gestellte Kontrolleinheit.

Gemäß diesem Aspekt ist es möglich, trockene beziehungsweise grobkörnige Schüttgüter in einen Silo zu füllen, so dass die Schüttgüter bis zur Höhe des Füllstandes den Bereich zwischen dem durch die beiden Stäbe gebildeten Kondensatorelektroden ausfüllen. Hierdurch ändert sich die Dielektrizitätskonstante innerhalb des durch die Kondensatorelektroden gebildeten Kondensators und folglich dessen Kapazität. Die Änderung der Dielektrizitätskonstante durch das Einbringen von trockenem Schüttgut im Vergleich zu Luft, kann in Abhängigkeit der Füllhöhe bestimmt werden, um so den Füllstand zu messen. Ferner kann durch eine explosionsgeschützte Ausführung der innerhalb des Silos eingebrachten Komponenten eine Verwendung für Brennstoffe, wie zum Beispiel Holzpeletts oder Kohlebriketts ermöglicht werden. Im Gegensatz zu bekannten Anordnungen kann die Anordnung der Stäbe mit einfachen Mitteln realisiert werden. Jedoch erhält man im Vergleich zu Zylinderkondensatoren oder Plattenkondensatoren eine geringe Kapazität, die auch unter Zugabe des den Silo fühlenden Stoffes im Vergleich zu bekannten Anwendungen nur geringfügig geändert wird.

Gemäß einer weiteren Ausführungsform wird demnach eine zusätzliche Kapazität innerhalb der Sensorelektronik parallel zu der durch die Stäbe zur Verfügung gestellten Messkapazität zur Verfügung gestellt.

Nachfolgend werden Ausführungsformen der Erfindung an Hand der Zeichnungen in schematischer Weise dargestellt. Es zeigen:
Fig. 1 zeigt eine Ausführungsform einer Vorrichtung zum Messen des Füllstandes von trockenen Schüttgütern;
Fig. 2 zeigt eine weitere Ausführungsform zur kapazitiven Messung in einem Silo;
Fig. 3 zeigt eine weitere Ausführungsform einer Vorrichtung zum Messen des Füllstandes von Schüttgütern in einem Silo;
Figs. 4a - 4d zeigen Querschnittsansichten von Kondensator-Elektroden, die in den Ausführungsformen der vorangegangenen Figuren eingesetzt werden können.

Die in den folgenden Figuren beschriebenen Ausführungsbeispiele werden anhand von Holzpellets als trockene Schüttgüter beschrieben. Im Allgemeinen sind hierunter Stoffe zu verstehen, die nicht in Form einer Flüssigkeit zur Verfügung gestellt werden. Die Bezeichnung als "trocken" ist nicht darauf eingeschränkt, dass die Schüttgüter keinen Feuchtigkeitsgehalt aufweisen können. Die Bezeichnung "trocken" bezieht sich lediglich darauf, dass die Füllung des Behältnisses, das heißt zum Beispiel des Silos, nicht fließfähig ist, sondern in Form von Granulat, Pellets, Brickets oder anderen Stücken in das Behältnis eingebracht wird. Bei den trockenen Schüttgütern handelt es sich bevorzugt um Brennstoffe. Beispiele für die trockenen Schüttgüter sind Holzpellets, Granulate wie z. B. Mais oder Getreide, Kohle-Brickets, andere Presslinge oder Hackschnitzel. Die Größer der Körner oder Stücke des Schüttgutes ist hier zumindest so groß, dass in wesentlichen keine Fließfähigkeit der Füllung im Silo besteht. Dies ist z. B. ab einem mittleren Durchmesser der Körner, Presslinge oder Stücke des Schüttgutes von 1 cm, bevorzugt 3 cm, gegeben.

Die in den folgenden Ausführungsformen dargestellten Elektroden des Kondensators zur kapazitiven Messung des Füllstandes sind in Form von Stäben oder Rohren dargestellt. Die Stäbe und Rohre zeichnen sich durch ein Verhältnis der Länge zu der Abmessung der größten Querschnitts-Dimension von zumindest 20:1, bevorzugt in einem Verhältnis 50:1, aus. Rohre, die eine Form eines Stabes darstellen, sind zusätzlich als Hohlkörper definiert. Stäbe oder Rohre können in den in den Figuren dargestellten Ausführungsbeispielen gegeneinander ausgetauscht werden.

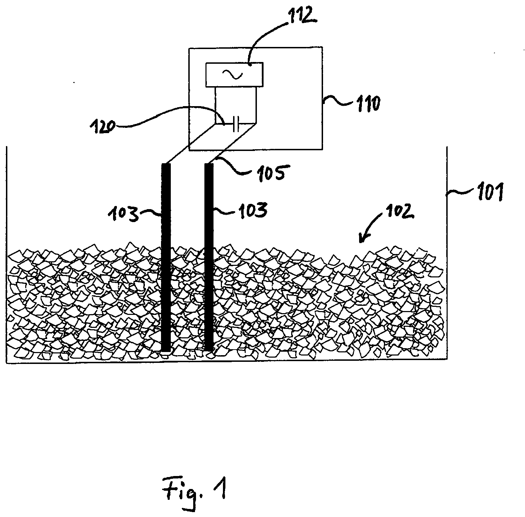

Fig. 1 zeigt eine Ausführungsform, bei der der Silo 101 schematisch dargestellt ist. Innerhalb des Silos befindet sich das trockene Schüttgut 102. Die Elektroden 103 reichen im Wesentlichen bis zum Boden des Silos 101. Ferner haben die Elektroden 103 eine Länge, so dass sie bei maximaler Füllung des Silos 101 nicht vollständig von dem Schüttgut 102 abgedeckt sind. Typischerweise kann der Abstand der Elektroden vom Boden ungefähr 1 cm sein.

Die Elektroden 103 sind aus elektrisch leitfähigen Stäben oder Rohren gebildet, die z. B. aus Kupfer oder Eisen hergestellt sein können. Die Rohre 103 sind in einem Abstand von z. B. ungefähr 2 cm bis 10 cm, bevorzugt 3 cm, fest in dem Silo 101 installiert. Sie sind elektrisch voneinander isoliert und lediglich über die Leitungen 105 mit der Sensorelektronik 110 verbunden.

Die Verwendung von Rohren ermöglicht auch der nicht-fließfähigen Füllung, wie z. B. das Schüttgut 102, den Raum zwischen den Elektroden 103 auszufüllen. Im Gegensatz zur Verwendung von Zylinder-Kondensatoren oder Platten-Kondensatoren, bildet der Kondensator, der aus den Elektroden 103 geformt ist, jedoch eine relativ geringe Kapazität. Die Kapazität besteht bis zur Füllhöhe der trockenen Schüttgüter aus der Kapazität mit einer Dielektrizitätskonstante der Schüttgüter. Oberhalb der Füllhöhe schließt sich ein Bereich mit der Dielektrizitätskonstante von Luft (ungefähr 1) an. Bei Änderung der Füllhöhe ändert sich die Kapazität des Füllstandkondensators, da sich der Bereich der Dielektrizitätskonstante von Luft und der Bereich der Dielektrizitätskonstante des Schüttguts 102 ändern.

Die Verwendung von Stäben oder Rohren, mit im Vergleich zu Zylinder-Kondensatoren oder Platten-Kondensatoren geringer Kapazität, verbessert auf der einen Seite die Verwendung für trockene Schüttgüter und die Kosteneffizienz bei der Herstellung. Auf der anderen Seite erschwert die hierdurch bedingte niedrige Kapazität die Messung des Füllstandes. Die Elektroden 103 sind mit Leitungen 105 mit der Sensorelektronik 110 verbunden. Aufgrund der erschwerten Füllstandmessung sollten die Drähte so kurz wie möglich sein, bevorzugt sind sie kürzer als 10 cm oder sogar 3 cm. Darüber hinaus ist zu dem Schwingkreis 112 innerhalb der Sensorelektronik 110 zusätzlich ein Kondensator 120 eingebaut, der ein stabiles Startverhalten des Schwingkreises 112 verbessert.

Der Schwingkreis innerhalb der Sensorelektronik kann z. B. ein Wien-Robinson-Oszillator sein. Bevorzugt handelt es sich hierbei um einen Oszillator, der mit einer Sinusschwingung oszilliert. Eine typische Frequenz des Schwingkreises im Leerzustand des Silos ist im Bereich von 100 bis 200 kHz, bevorzugt 150 kHz. Die Frequenz verringert sich, wenn der Silo befüllt wird.

Die Elektroden 103 haben typischerweise eine Kapazität von 70 bis 120 pF/m oder 25 bis 120 pF. Der zusätzliche Kondensator 120 hat typischerweise eine Kapazität von 40 bis 60 pF, bevorzugt 47 pF.

Bei der Befüllung des Silos 101 mit dem trockenen Schüttgut 102 findet eine Staubentwicklung statt. Daher ist die Sensorelektronik, die sich innerhalb des Silos befindet, explosionsgeschützt ausgebildet. Beim Umgang mit Stoffen, die mit Sauerstoff reagieren können, z. B. Brennstoffe, ist mit einer Explosionsgefahr zu rechnen, wenn innerhalb des Silos der brennbare Stoff als feinkörniger Staub in der Luft vorliegt. Da auf die Größe und die Dichte der Staubkörner, insbesondere beim Befüllen des Silos, wenig Einfluss genommen werden kann, wird zum Explosionsschutz die Sensorelektronik entsprechend ausgebildet. Hierzu werden Funken an den elektrischen Bauteilen innerhalb der explosionsgefährdeten Umgebung sowie statische Aufladung nicht geerdeter Bauteile und heiße Oberflächen vermieden.

Gemäß einer Ausführungsform ist der Explosionsschutz durch eine der folgenden oder eine Kombination der Folgenden Maßnahmen zur Verfügung gestellt: eine Strombegrenzung der Elektroden, eine Strombegrenzung der Sensorelektronik, eine Temperaturüberwachung, eine Spannungsfreischaltung im Störungsfall, oder ein explosionsgeschütztes Gehäuse.

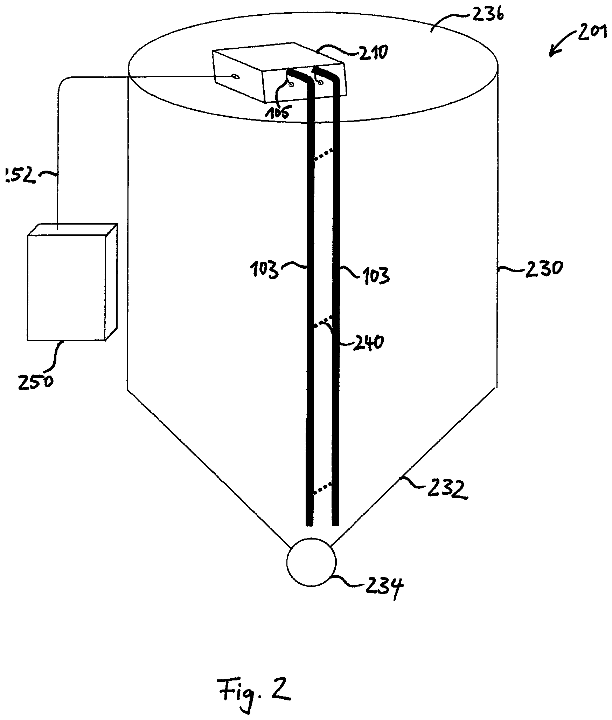

Fig. 2 zeigt eine weitere Ausführungsform. Der Silo 201 besteht aus einer einen Kreiszylinder bildenden Wand 230 und einer einen Kegelstumpf bildenden Wand 232. Das zulaufende Ende des Kegelstumpfes führt zu einer Förderöffnung 234. Durch die Förderöffnung 234 werden die trockenen Schüttgüter aus dem Silo 201 entnommen, um ihrer Verwendung zugeführt zu werden. Der Silo beinhaltet weiterhin eine Decke oder einen Deckel 236.

Unterhalb der Decke ist die Sensorelektronik 210 angebracht. Da die Sensorelektronik 210 innerhalb des Silos 201 zur Verfügung gestellt ist, können die Leitungen 105 kurz gehalten werden. Hierdurch wird z. B. eine Messung der niedrig-kapazitiven Elektroden 103 verbessert. Die Elektroden 103 werden mit Abstandshaltern 240 in einem festen Abstand gehalten. Die Abstandshalter 240 sind isolierend ausgebildet. Die Elektroden 103, d. h. die Stäbe oder Rohre, reichen von der oberen Kante des Silos 201 bis zum unteren Ende des kegelförmigen Teils des Silos.

Das Ausgangssignal des in der Sensorelektronik 210 befindlichen Oszillators wird verstärkt, und für einen Mikro-Controller verwertbares Signal (Rechtecksignal, PWM-Signal oder Analogsignal) umgewandelt. Der Mikro-Controller misst die Frequenz und errechnet daraus einen Mittelwert den er über die Leitung 252 an eine Kontrolleinheit 250 außerhalb des Silos übermittelt. Gemäß weiteren Ausführungsformen, die mit den hierin beschriebenen Ausführungsformen kombinierbar ist, kann anstelle eines Mikrocontrollers auch ein feldprogrammierbare Gatterschaltung (Field Programmable Gate Array: FPGA) oder ähnliches verwendet werden.

In der Kontrolleinheit wird der durch die Sensorelektronik ermittelte Wert umgerechnet, um in ein Verhältnis zur Silogröße und/oder zur Siloform gebracht zu werden. Die Kontrolleinheit enthält eine CPU und Kontrollvorrichtungen, die es ermöglichen, den Füllstand z. B. zu visualisieren oder weiterzuverarbeiten. Typischerweise ist kann bei Unterschreiten eines vorgegebenen Füllstandes einen Alarm abgesetzt werden. Leitung 252 versorgt die Sensorelektronik typischerweise auch mit Spannung und überwacht eventuelle Fehlfunktionen, um durch Abschaltung der Sensorelektronik im Notfall Schaden oder Brand zu verhindern. Hierbei schaltet die Kontrolleinheit die Sensorelektronik spannungsfrei. Die Kontrolleinheit kann weiterhin einen Speicher zur Speicherung der Werte beinhalten. Gemäß einer weiteren Ausführungsform, kann die Kontrolleinheit auch weitere Anzeigeelemente wie einen Bildschirm beinhalten, sowie Bedienelemente wie eine Tastatur oder eine Maus, um eine weiterreichende Auswertung des Füllstandes zu erlauben. Hierdurch kann z. B. ein durchschnittlicher Verbrauch des trockenen Schüttgutes oder andere Statistiken ausgewählt, berechnet und dargestellt werden.

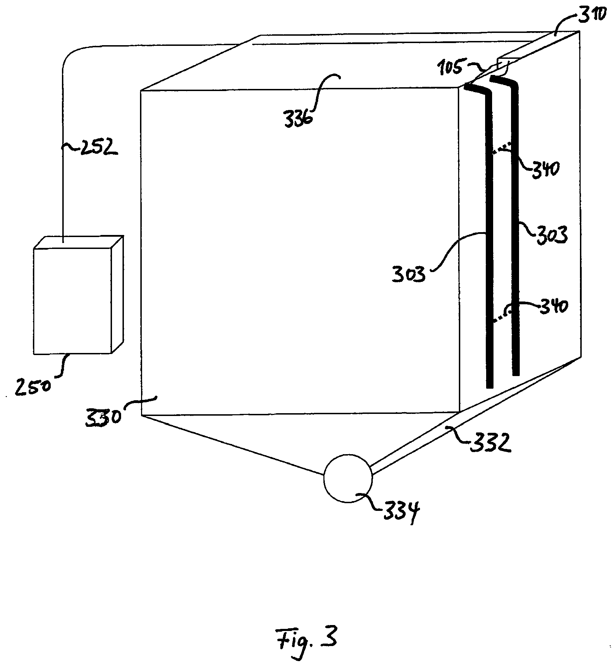

Gemäß einer weiteren Ausführungsform kann die Kontrolleinheit im Wesentlichen auch durch eine Anzeigeeinheit ersetzt werden. In diesem Fall wird von der Sensorelektronik direkt, z. B. ein pulsweitenmoduliertes Signal ausgegeben, das von einer Anzeigeeinheit in die entsprechende Anzeige umgesetzt wird. Die Sensorelektronik übernimmt demnach zusätzliche Funktionen, so dass die in Bezug auf die Figuren 2 und 3 beschriebene Kontrolleinheit auf eine Anzeigeeinheit reduziert werden kann.

Bei der Erstinbetriebnahme ist der Silo leer und die Kontrolleinheit speichert das Signal der Sensorelektronik in leerem Zustand. Über eine Eingabeeinrichtung wird der Kontrolleinheit die Form des Silos sowie dessen Masse in einem Speicher zugeführt. Über einen Schalter kann ein Menü "Siloabgleich im leeren Zustand" ausgewählt werden. Hierdurch kann ein Füllstand von 0 % definiert werden. Nach dem vollständigen Befallen des Silos wird durch einen Schalter oder über ein Eingabeelement ein "Siloabgleich im vollen Zustand" ausgewählt. Dieser Wert entspricht dem Füllstand von 100 %. Hierdurch kann die Kontrolleinheit auf den Silo inklusive dessen Dimensionen und die maximale Füllhöhe abgeglichen werden. Eine entsprechende Speichereinheit der Kontrolleinheit kann die Werte auch bei Stromausfall speichern, so dass nach einem Stromausfall keine Entleerung und Neubefüllung notwendig ist.

Fig. 3 zeigt eine weitere Ausführungsform. Ein Zylinder mit rechteckiger Grundfläche ist durch Wände 330 gebildet. Die Wände 332 führen pyramidenförmig zu der Auslassöffnung 334. Auf der Oberseite ist der Silo durch die Decke 336 abgeschlossen. Innerhalb des Silos ist an der Oberseite die Sensorelektronik 310 angebracht, die mit Leitungen 105 mit den Elektroden 303 verbunden sind. Die Elektroden sind durch Abstandshalter 340 in einem festen Abstand montiert und befinden sich in der vorliegenden Ausführungsform an der Wand des Silos. Eine analoge Anordnung kann auch für die anderen Ausführungsform verwendet werden. Die Leitung 252 von der Sensorelektronik zu der Kontrolleinheit 250 führt in der vorliegenden Ausführungsform nicht entlang der Oberkante einer der Wände 330 sondern ist durch die Wand 330 hindurchgeführt.

In der vorliegenden Ausführungsform reichen die stabförmigen Elektroden 303 lediglich bis ans untere Ende des Quaders des Silos. Dies ist dadurch möglich, dass der pyramidenförmig zulaufende Teil des Silos ausreichend flach ausgebildet ist, so dass das untere Ende des pyramidenförmigen Teils nur geringfügig unterhalb des unteren Endes des quaderförmigen Teils des Silos ist. Der Abstand des unteren Endes der Elektroden 303 von dem unteren Ende des Silos, der z. B. durch die Öffnung 334 definiert werden kann, beträgt bevorzugt nicht mehr als 10 cm.

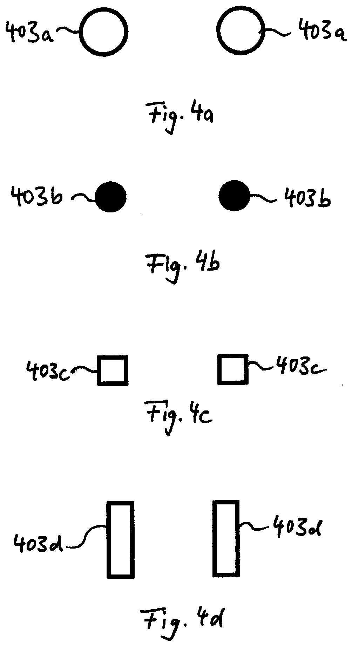

Aufsichten von Elektroden, die einen Füllstandkondensator innerhalb des Silos bilden, sind in den Figs. 4a bis 4d dargestellt. Gemäß einer ersten Ausführungsform sind die Elektroden kreisförmige Rohre 403a. Dies ist in Fig. 4a dargestellt. Gemäß der Ausführungsform von Fig. 4b werden die Elektroden durch kreisförmige Vollstäbe 403b gebildet. Gemäß der Ausführungsform von Fig. 4c werden die Elektroden durch quadratische Rohre 403 c ausgebildet. Gemäß der in Fig. 4d dargestellten Ausfuhrungsform werden die Elektroden durch rechteckige Rohre 403d ausgebildet.

Die Vorrichtungen besitzen den Vorteil, dass auf einfache und kostengünstige Weise auch für trockene Schüttgüter, wie z. B. Brennstoffe, eine kapazitive Füllstandmessung durchgeführt werden kann. Die bei trockenen Schüttgütern auftretenden Probleme werden durch stabförmige oder rohrförmige Elektroden gelöst. Die Sensorelektronik ist in unmittelbarer Nähe der Elektroden angeordnet und innerhalb des Silos explosionsgeschützt ausgebildet. Eine Messung der geringen Kapazitäten, die durch die stabförmigen oder rohrförmigen Elektroden zur Verfügung gestellt sind, wird u.a. durch einen zusätzlichen Kondensator oder zusätzliche Kondensatoren, die zwischen dem Schwingkreis und den Elektroden angeordnet sind, verbessert.

Gemäß einer weiteren Ausführungsform, die mit einer der anderen Ausführungsformen kombiniert werden kann, enthält der Sensor mindestens ein Paar von Stäben, die mit einer Sensorelektronik verbunden sind. Typischerweise könne zum Beispiel auch 2, 3, 4 oder mehr Paare von Stäben als Kondensatorelektroden zur Verfügung gestellt sein. Dabei ist eine Messung in unterschiedlichen Bereichen des Silos möglich.

Gemäß noch weiteren Ausführungsformen, können die Stäbe eine Länge von bis zu 35 m oder bis zu 50 m haben, was auch eine Messung bei größeren Silos erlaubt.

Gemäß noch weiteren Ausführungsformen, die mit einer der hier beschriebenen Ausführungsformen kombiniert werden kann, enthält die Sensorelektronik Mittel zur Reduktion oder Verhinderungen statischer Aufladung der Stäbe. Als Beispiel werden jeweils von den Anschlüssen der jeweiligen Stäbe in der Sensorelektronik Paare von Zehnerdioden und/oder Widerstände mit dem Potentialausgleich bzw. Masse verbunden. Dabei sind die Paare von Zehnerdioden typischerweise in Reihe gegeneinander geschaltet, so dass erst ab einer vorbestimmten Potentialdifferenz zwischen einem Elektrodenanschlusses und dem Potentialausgleich, beispielsweise im Bereich von 3 V bis 12 V, eine Erdung des Anschlusses zur Verhinderung von statischen Aufladungen erfolgt. Durch Mittel zur Reduktion oder Verhinderung von statischen Aufladungen der Stäbe kann die Sensorelektronik geschützt werden und weiterhin Funkenschlag verhindert werden, der in explosionsgefährdeten Bereichen eine Gefahr darstellt.

Gemäß noch weiteren Ausfuhrungsformen ist ein Sensorabgleich zur Kalibrierung der Füllhöhe derart möglich, dass die Anlage im Leeren Zustand in Betrieb genommen wird. Während der Befüllung ist die Anlage im Betrieb und misst die Werte während des Füllvorgangs. Nach dem Befüllen kann die Anlage, wie oben beschrieben, durch Setzen des "Siloabgleichs im vollen Zustand" und den Messdaten während der Befüllung kalibriert werden.

## Patentansprüche

1. Silo mit einem kapazitiven Füllstandsensor zur Bestimmung eines Füllstandes von trockenen Schüttgütern, insbesondere von Brennstoffen, in einem Silo (101, 201) mit:
einem ersten Stab (102, 303, 403), der eine erste Kondensatorelektrode bildet und in dem Silo fest angebracht ist;
einem zweiten Stab (102, 303, 403), der eine zweite Kondensatorelektrode bildet und in einem vorbestimmten Abstand vom ersten Stab und außerhalb des ersten Stabes im Wesentlichen parallel zu dem ersten Stab fest angebracht ist, wobei der erste Stab und der zweite Stab (102, 303, 403) einen Kondensator bilden;
einer einen Schwingkreis (112) beinhaltenden Sensorelektronik (110, 210, 310), wobei der erste Stab und der zweite Stab elektrisch mit der Sensorelektronik verbunden und elektrisch voneinander isoliert sind; und
einer Kontrolleinheit (250), die außerhalb des Silos zur Verfügung gestellt ist, und geeignet ist, einen von der Sensorelektronik zur Verfügung gestellten Wert in einen Füllstand umzurechnen,
**dadurch gekennzeichnet, dass**
a) die den Schwingkreis (112) beinhaltende Sensorelektronik (110, 210, 310), innerhalb des Silos zur Verfügung gestellt ist;
b) die den Schwingkreis (112) beinhaltende Sensorelektronik (110, 210, 310) explosionsgeschützt ausgebildet ist.

2. Silo gemäß Anspruch 1, wobei der Kondensator im leeren Silo eine Kapazität pro Längeneinheit von maximal 120 pF/m besitzt.

3. Silo gemäß Anspruch1 oder 2, wobei die Sensorelektronik einen Schwingkreis, bevorzugt einen Wien-Robinson-Ozillator, enthält und zusätzlich ein Kondensator (120) mit einer Kapazität mit einem im leeren Silo gemessenen Wert von ungefähr 25 pF bis 75 pF, bevorzugt von ungefähr 45 bis 55 pF, parallel geschaltet wird.

4. Silo gemäß einem der vorangehenden Ansprüche, wobei die Sensorelektronik einen Mikrokontroller und einen Verstärker beinhaltet.

5. Silo gemäß einem der vorangehenden Ansprüche, wobei der erste Stab und der zweite Stab von zumindest zwei isolierenden Abstandshaltern in dem vorbestimmten Abstand gehalten werden.

6. Silo gemäß einem der vorangehenden Ansprüche, wobei der vorbestimmt Abstand zwischen dem ersten Stab (102, 303, 403) und dem zweiten Stab (102, 303, 403) im Bereich von 2 cm bis 10 cm. bevorzugt im Bereich von ungefähr 2.5 bis 5.0 cm liegt.

7. Silo gemäß einem der vorangehenden Ansprüche, wobei der erste Stab und der zweite Stab dazu eingerichtet sind, im Wesentlichen vertikal ausgerichtet zu werden.

8. Silo gemäß einem der vorangehenden Ansprüche, wobei der erste Stab und der zweite Stab eine Ausdehnung in vertikaler Richtung haben, die zumindest vom maximalen Füllstand des Silos ausgehend im wesentlichen bis zu einem gegenüberliegenden Ende des Silos reicht. bevorzugt bis ungefähr 5 cm vor dem gegenüberliegenden Ende des Silos reicht.

9. Silo gemäß Anspruch 8, wobei die Ausdehnung in vertikaler Richtung derart gestaltet ist, dass der erste Stab und der zweite Stab das gegenüberliegende Ende des Silos nicht berühren.

10. Silo gemäß einem der vorangehenden Ansprüche, wobei der erste Stab und der zweite Stab jeweils mit einem elektrischen Leiter (105) mit der Sensorelektronik verbunden sind und wobei die elektrischen Leiter eine maximale Länge von 30 cm, bevorzugt 20 cm, besonders bevorzugt von ungefähr 5 cm haben.

11. Silo gemäß einem der vorangehenden Ansprüche, wobei der erste und der zweite Stab (102, 303, 403) aus Metall, bevorzugt aus Kupfer sind.

12. Silo gemäß einem der vorangehenden Ansprüche, wobei das erste und das zweite Stab hohl sind.

13. Silo gemäß einem der vorangehenden Ansprüche, wobei der erste und der zweite Stab einen Außendurchmesser von 1 cm bis 3 cm haben.

14. Silo gemäß einem der vorangehenden Ansprüche, wobei der erste und der zweite Stab eine im Bezug auf die Umgebung eine elektrisch leitende Oberfläche haben.

15. Silo gemäß einem der vorangehenden Ansprüche, wobei der erste und der zweite Stab einen Querschnitt haben, der rund, elliptisch, quadratisch, oder rechteckig ist.

## Claims

1. Silo with a capacitive fill level sensor for determining a fill level of dry bulk materials, in particular fuels, in a silo (101,201), the fill level sensor having:
a first rod (102, 303, 403) which forms a first capacitor electrode and is permanently fitted in the silo;
a second rod (102, 303, 403) which forms a second capacitor electrode and is permanently fitted at a predetermined distance from the first rod and essentially parallel to the first rod, and outside the latter, with the first rod and the second rod (102, 303, 403) forming a capacitor;
sensor electronics (110, 210, 310) which comprise a resonant circuit (112), the first and second rods being electrically connected to the sensor electronics and being electrically insulated from one another; and
a control unit (250) which is provided outside the silo and is suitable for converting a value provided by the sensor electronics into a fill level,
**characterized in that**
a) the sensor electronics (110, 210, 310) comprising the resonant circuit (112) are provided within the silo;
b) the sensor electronics (110, 210, 310) comprising the resonant circuit (112) are designed to be explosion-proof.

2. Silo pursuant to Claim 1, with the capacitor having a capacity per unit of length of 120 pF/m max. with the silo empty.

3. Silo pursuant to Claim 1 or 2, with the sensor electronics comprising a resonant circuit, preferably a Wien-Robinson oscillator, and additionally a capacitor (120) having a capacity, measured with the silo empty, of approximately 25 pF to 75 pF, preferably of approximately 45 to 55 pF, is installed in parallel.

4. Silo pursuant to any of the preceding claims, with the sensor electronics comprising a micro-controller and an amplifier.

5. Silo pursuant to any of the preceding claims, with the first rod and the second rod being held at the predetermined distance by at least two insulating spacers.

6. Silo pursuant to any of the preceding claims, with the predetermined distance between the first rod (102, 303, 403) and the second rod (102, 303, 403) lying in a range of 2 cm to 10 cm, preferably in the range of approximately 2.5 to 5.0 cm.

7. Silo pursuant to any of the preceding claims, with the first rod and the second rod being arranged so as to be aligned essentially vertically.

8. Silo pursuant to any of the preceding claims, with the first rod and the second rod extending in the vertical direction, and reaching essentially at least - starting from the maximum fill level of the silo - to an opposite end of the silo, preferably to within approximately 5 cm from the opposite end of the silo.

9. Silo pursuant to Claim 8, with the vertical extension being designed such that the first rod and the second rod do not touch the opposite end of the silo.

10. Silo pursuant to any of the preceding claims, with the first rod and the second rod each being connected to the sensor electronics by means of an electrical conductor (105), and with the electrical conductors having a maximum length of 30 cm, preferably 20 cm, and particularly preferred, approximately 5 cm.

11. Silo pursuant to any of the preceding claims, with the first rod and the second rod (102, 303, 403) being made of metal, preferably of copper.

12. Silo pursuant to any of the preceding claims, with the first rod and the second rod being hollow.

13. Silo pursuant to any of the preceding claims, with the first rod and the second rod having an outer diameter of 1 cm to 3 cm.

14. Silo pursuant to any of the preceding claims, with the first rod and the second rod having a surface that is electrically conductive with regard to their environment.

15. Silo pursuant to any of the preceding claims, with the first rod and the second rod having a cross section that is round, elliptical, square, or rectangular.

## Revendications

1. Silo doté d'un capteur de niveau capacitif, destiné à déterminer un niveau de remplissage de produit sec en vrac, en particulier de combustibles, dans un silo (101, 201), et comprenant :
une première barre (102, 303, 403), qui forme une première électrode de condensateur et est montée fixement dans le silo ;
une deuxième barre (102, 303, 403) qui forme une deuxième électrode de condensateur et qui est montée fixement, essentiellement parallèlement à la première barre, à une distance prédéterminée de la première barre et à l'extérieur de la première barre, sachant que la première barre et la deuxième barre (102, 303, 403) forment un condensateur ;
un système électronique de capteur (110, 210, 310) comprenant un circuit oscillant (112), sachant que la première barre et la deuxième barre sont électriquement reliées au système électronique de capteur et sont électriquement isolées l'une de l'autre ; et
une unité de commande (250), qui est mise à disposition à l'extérieur du silo et
qui permet de convertir une valeur fournie par le système électronique de capteur en un niveau de remplissage,
**caractérisé en ce que**
a) le système électronique de capteur (110, 210, 310) contenant le circuit oscillant (112) est mis à disposition à l'intérieur du silo ;
b) le système électronique de capteur (110, 210, 310) contenant le circuit oscillant (112) est conçu protégé contre les explosions.

2. Silo selon la revendication 1, sachant que le condensateur possède, dans le silo vide, une capacité de 120 pF/m au maximum par unité de longueur.

3. Silo selon la revendication 1 ou 2, sachant que le système électronique de capteur contient un circuit oscillant, de préférence un oscillateur de Wien-Robinson, et, de plus, un condensateur (120) ayant une capacité d'une valeur mesurée dans le silo vide d'environ 25 pF à 75 pF, de préférence d'environ 45 à 55 pF, est monté en parallèle.

4. Silo selon l'une des revendications précédentes, sachant que le système électronique de capteur comprend un microcontrôleur et un amplificateur.

5. Silo selon l'une des revendications précédentes, sachant que la première barre et la deuxième barre sont maintenues à la distance prédéterminée par au moins deux écarteurs isolants.

6. Silo selon l'une des revendications précédentes, sachant que la distance prédéterminée entre la première barre (102, 303, 403) et la deuxième barre (102, 303, 403) se situe dans la plage de 2 cm à 10 cm, de préférence dans la plage d'environ 2,5 à 5,0 cm.

7. Silo selon l'une des revendications précédentes, sachant que la première barre et la deuxième barre sont conçues pour être orientées essentiellement à la verticale.

8. Silo selon l'une des revendications précédentes, sachant que la première barre et la deuxième barre possèdent une étendue en direction verticale qui, en partant au moins du niveau de remplissage maximal du silo, s'étend sensiblement jusqu'à une extrémité opposée du silo, de préférence s'étend jusqu'à environ 5 cm avant l'extrémité opposée du silo.

9. Silo selon la revendication 8, sachant que l'étendue en direction verticale est dimensionnée de telle sorte que la première barre et la deuxième barre ne touchent pas l'extrémité opposée du silo.

10. Silo selon l'une des revendications précédentes, sachant que la première barre et la deuxième barre sont reliées chacune au système électronique de capteur par un conducteur électrique (105), et sachant que les conducteurs électriques possèdent une longueur maximale de 30 cm, de préférence de 20 cm, d'une manière particulièrement préférée d'environ 5 cm.

11. Silo selon l'une des revendications précédentes, sachant que la première barre et la deuxième barre (102, 303, 403) sont en métal, de préférence en cuivre.

12. Silo selon l'une des revendications précédentes, sachant que la première barre et la deuxième barre sont creuses.

13. Silo selon l'une des revendications précédentes, sachant que la première barre et la deuxième barre ont un diamètre extérieur de 1 cm à 3 cm.

14. Silo selon l'une des revendications précédentes, sachant que la première barre et la deuxième barre ont une surface électriquement conductrice par rapport à l'environnement.

15. Silo selon l'une des revendications précédentes, sachant que la première barre et la deuxième barre ont une section qui est ronde, elliptique, carrée ou rectangulaire.
